# EUROPEAN PATENT APPLICATION

(11) **EP 1 898 128 A1**
(43) Date of publication of application: **12.03.2008**
(21) Application number: 06254671.8
(22) Date of filing: 07.09.2006
(51) Int. Cl.: F16H 61/04

(54) **Improvements in or relating to transmission shifting**

(71) Applicant: Turner Powertrain Systems Limited, Racecourse Road West Midlands Wolverhamptom, WV6 0QT (GB)
(72) Inventor: Birkel, Jeff c/o Turner Powertrain Systems Ltd, Wolverhampton WV6 0QT (GB); Griffiths, Alan c/o Turner Powertrain Systems Ltd, Wolverhampton WV6 0QT (GB)
(74) Representative: Murnane, Graham John

(57) **Abstract**

A method of shifting a gearbox (10), the gearbox (10) comprising an input shaft (12), a layshaft (14), an output shaft (20) engageable with the layshaft (14), a first clutch mechanism (16) configured to selectively engage the input shaft (12) with the layshaft (14) and cause rotation of the layshaft (14) in a first direction, and a second clutch mechanism (18) configured to selectively engage the input shaft (12) with the layshaft (14) and cause rotation of the layshaft (14) in a second opposite direction. The method comprises the steps of: disengaging the first clutch mechanism (16) from the input shaft (12), disengaging the currently selected gear, comparing the rotational speeds of the layshaft (14) and the output shaft (20), temporarily engaging the second clutch mechanism (18) with the input shaft (12) until the rotational speed of the layshaft (14) substantially matches that of the output shaft (20), engaging a newly selected gear and re-engaging the first clutch mechanism (16) with the input shaft (12).

## Description

The present disclosure relates to a gearbox, particularly, but not exclusively, to a synchroless manual gearbox and a method of shifting the same.

In conventional manual transmissions, shift rods are moved manually by a shift lever to engage a selected gear drive ratio. Manual transmissions usually include a plurality of shift rods, with one shift rod being associated with two gear drive ratios. In' early transmissions, engine speed had to be matched to the gear speed at the time of a gear change in order to permit smooth meshing of the drive gears. As transmissions advanced, synchronisers were implemented that engaged prior to gear engagement to synchronise the transmission and engine speed prior to actual gear engagement.

Manual transmissions have been automated to include electrical or hydraulic actuation of the shift rod in lieu of the manual actuation via the shift lever.

In high performance applications the automated actuation of the shift rods may have included automated control of engine speed to match transmission speed for smooth gear engagement, thus avoiding the use of synchronisers, which are expensive. In other applications the transmission was automated but still used synchronisers rather than automated engine/transmission controls to ensure a smooth gear engagement.

Manual gearboxes without synchronisers require means to either slow down the layshaft during upshifts to match the layshaft speed to the output shaft speed. Slowing down of the layshaft has conventionally been done by mounting an external braking device to the gear train. However, external braking devices are expensive and bulky.

It is an object of the present disclosure to provide a gearbox and a method of shifting the same which obviates or mitigates one or more of the disadvantages referred to above.

According to a first aspect of the present disclosure there is provided a method of shifting a gearbox, the gearbox comprising an input shaft, a layshaft, an output shaft engageable with the layshaft, a first clutch mechanism configured to selectively engage the input shaft with the layshaft and cause rotation of the layshaft in a first direction, and a second clutch mechanism configured to selectively engage the input shaft with the layshaft and cause rotation of the layshaft in a second opposite direction, the method comprising the steps of:
disengaging the first clutch mechanism from the input shaft;
disengaging the currently selected gear;
comparing the rotational speeds of the layshaft and the output shaft;
temporarily engaging the second clutch mechanism with the input shaft until the rotational speed of the layshaft substantially matches that of the output shaft;
engaging a newly selected gear; and
re-engaging the first clutch mechanism with the input shaft.

According to a second aspect of the present disclosure there is provided a method of shifting a gearbox, the gearbox comprising an input shaft, a layshaft engageable with the input shaft, an output shaft, a first clutch mechanism configured to selectively engage the output shaft with the layshaft and cause rotation of the output shaft in a first direction, and a second clutch mechanism configured to selectively engage the output shaft with the layshaft and cause rotation of the output shaft in a second opposite direction, the method comprising the steps of:
disengaging the first clutch mechanism from the output shaft;
disengaging the currently selected gear;
comparing the rotational speeds of the layshaft and the output shaft;
temporarily engaging the second clutch mechanism with the output shaft until the rotational speed of the layshaft substantially matches that of the output shaft;
engaging a newly selected gear; and
re-engaging the first clutch mechanism with the output shaft.

According to a third aspect of the present disclosure there is provided a gearbox comprising:
an input shaft;
a layshaft;
an output shaft engageable with the layshaft;
a first clutch mechanism configured to selectively engage the input shaft with the layshaft and cause rotation of the layshaft in a first direction;
a second clutch mechanism configured to selectively engage the input shaft with the layshaft and cause rotation of the layshaft in a second opposite direction; and
a controller configured to selectively engage either the first clutch mechanism when the layshaft is rotating in the second direction or the second clutch mechanism when the layshaft is rotating in the first direction such that the rotational speed of the layshaft substantially matches that of the output shaft.

According to a fourth aspect of the present disclosure there is provided a gearbox comprising:
an input shaft;
a layshaft engageable with the input shaft;
an output shaft;
a first clutch mechanism configured to selectively engage the output shaft with the layshaft and cause rotation of the output shaft in a first direction;
a second clutch mechanism configured to selectively engage the output shaft with the layshaft and cause rotation of the output shaft in a second opposite direction; and
a controller configured to selectively engage either the first clutch mechanism when the output shaft is rotating in the second direction or the second clutch mechanism when the output shaft is rotating in the first direction such that the rotational speed of the layshaft substantially matches that of the output shaft.

According to a fifth aspect of the present disclosure there is provided a vehicle comprising the gearbox according to the third or fourth aspect of the present disclosure.

### Detailed Description of Disclosure

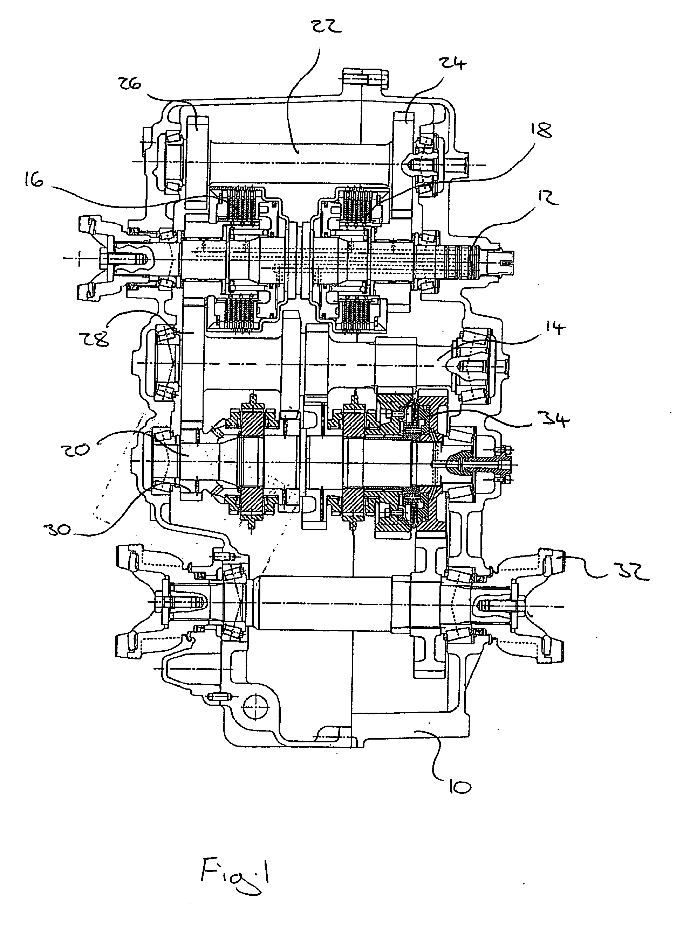

Embodiments of the present disclosure will now be described, by way of example only, with reference to the accompanying drawing, in which:-
Fig. 1 is a cross-sectional view of a gearbox according to the present disclosure.

With reference to Fig. 1, the gearbox 10 comprises an input shaft 12, a layshaft 14, a first clutch mechanism 16, a second clutch mechanism 18 and an output shaft 20.

The first and second clutch mechanisms 16, 18 are configured to selectively engage the input shaft 12 with the layshaft 14.

The first clutch mechanism 16 is configured to selectively engage the input shaft 12 with the layshaft 14 to cause rotation of the layshaft 14 in a first direction.

The second clutch mechanism 18 is configured to selectively engage the input shaft 12 with the layshaft 14 to cause rotation of the layshaft 14 in a second opposite direction. Rotation of the layshaft 14 in the second opposite direction is effected by an idler shaft 22 which provides an indirect connection from the input shaft 12 to the layshaft 14. For ease of illustration, the idler shaft 22 has been positioned in Fig. 1 above the input shaft 12. However, it should be appreciated that the idler shaft 22 permanently meshes with both the layshaft 14 and the input shaft 12. This is achieved by the right-most gear 24 of the idler shaft 22 meshing with the input shaft 12 and the left-most gear 26 of the idler shaft 22 meshing with the primary gear 28 of the layshaft 14.

The output shaft 20 includes a gear train 30 which engages with the layshaft 14 in a conventional manner. One difference between the gearbox 10 of the present disclosure and conventional gearboxes is that the gearbox 10 of the present disclosure does not include any synchronisers to control the rotational speed of the output shaft 20.

There is also illustrated in Fig. 1 an axle shaft 32 which connects to the axle of a vehicle (not shown).

The gearbox 10 also comprises a controller (not shown) which is configured to operate, amongst other things, the first and second clutch mechanisms 16, 18. The controller may include means for comparing the rotational speeds of the layshaft 14 and the output shaft 20. The means for comparing the rotational speeds of the layshaft 14 and the output shaft 20 may include sensors located on the layshaft 14 and the output shaft 20.

Furthermore, the controller may be configured to receive a gearbox shift request. This shift request may be an upshift request.

The gearbox 10 may also further comprise a gear selection lever (not shown) and at least one shift rod connected thereto, and means for preventing the gear selection lever and shift rod from selecting a gear until the rotational speed of the layshaft 14 is substantially equal to that of the output shaft 20. The means for preventing the gear lever and shift rod from selecting a gear may include a detent which prevents movement of the shift rod.

### Industrial Applicability

In operation, shifting gear in the gearbox 10 is performed by carrying out the following operations, in which it is assumed that the gearbox 10 is presently in a selected gear of the gear train 30 and the first clutch mechanism 16 is engaged with the input shaft 12:
(a) disengaging the first clutch mechanism 16 from the input shaft 12;
(b) disengaging the currently selected gear from the gear train 30;
(c) comparing the rotational speeds of the layshaft 14 and the output shaft 20;
(d) temporarily engaging the second clutch mechanism 18 with the input shaft 12 until the rotational speed of the layshaft 14 substantially matches that of the output shaft 20;
(e) engaging a newly selected gear from the gear train 30; and
(f) re-engaging the first clutch mechanism 16 with the input shaft 12.

Each of the above steps may be performed by the controller of the gearbox 10.

In the above operation, the key steps performed by the controller are steps (c) and (d). Step (c) provides the controller with information concerning the difference in the rotational speeds of the layshaft 14 and the output shaft 20. Step (d) allows the rotational speed of the layshaft 14 to be altered such that it substantially matches that of the output shaft 20.

Temporarily engaging the second clutch mechanism 18 with the input shaft 12 when the layshaft 14 is rotating in the first direction, results in the reduction of rotational speed of the layshaft 14. This is because the second clutch mechanism 18 is configured to cause rotation of the layshaft 14 in the second opposite direction.

Once the rotational speed of the layshaft 14 substantially matches that of the output shaft 20 a newly selected gear may be safely engaged. Typically, this operation describes an upshift of a gearbox.

The operations described above may additionally comprise the step of receiving a gearbox shift request. This may be an upshift request.

Controlling the rotational speed of the layshaft 14 in this manner obviates the use of synchronisers in the gearbox 10.

The controller is configured to allow engagement between the layshaft 14 and the output shaft 20 only when the rotational speed of the layshaft 14 is substantially equal to that of the output shaft 20.

The operations described above may additionally comprise the step of preventing engagement of the newly selected gear until the rotational speed of the layshaft 14 substantially matches that of the output shaft 20. Furthermore, the operations described above may additionally comprise the step of preventing a gear selection taking place until the rotational speed of the layshaft 14 substantially matches that of the output shaft 20.

Although the operation of the gearbox 10 has been described above with the first clutch mechanism 16 being engaged with the input shaft 12 and the second clutch mechanism 18 being temporarily engaged to reduce the rotational speed of the layshaft 14, it should be appreciated that the same principle of operation applies when the second clutch mechanism 18 is engaged with the input shaft 12 and the layshaft 14 is rotating in the opposite direction. For example, when the gearbox 10 is operating in a forward or a reverse direction. In this case the first clutch mechanism 16 is temporarily engaged with the input shaft 12 to reduce the rotational speed of the layshaft 14.

The gearbox 10 therefore obviates or mitigates the disadvantages of previous proposals by providing a gearbox in which the rotational speeds of the layshaft 14 and the output shaft 20 may be substantially matched by temporarily engaging either the first or second clutch mechanism 16, 18 with the input shaft 12. The gearbox 10 therefore avoids the need to provide synchronisers to match the rotational speeds of the layshaft 14 and the output shaft 20.

Modifications and improvements may be made to the above without departing from the scope of the present disclosure. For example, although the gearbox 10 has been described above as comprising first and second clutch mechanisms 16, 18 located between the input shaft 12 and the layshaft 14, it should be appreciated that in a second embodiment of the gearbox 10, the first and second clutch mechanisms 16, 18 may be located between the layshaft 14 and the output shaft 20 of the gearbox 10.

The gearbox 10 of the second embodiment is identical to the first embodiment except the first clutch mechanism 16 is configured to selectively engage the output shaft 20 with the layshaft 14 and cause rotation of the output shaft 20 in a first direction, and the second clutch mechanism 18 is configured to selectively engage the output shaft 20 with the layshaft 14 and cause rotation of the output shaft 20 in a second opposite direction.

The operation of the gearbox 10 of the second embodiment is substantially identical to the first embodiment, i.e. the controller compares the rotational speeds of the layshaft 14 and the output shaft 20 and temporarily engages either the first or second clutch mechanism 16, 18 (depending on the rotational direction of the output shaft 20) in order to substantially match the rotational speeds of the layshaft 14 and the output shaft 20. Once the rotational speeds of the layshaft 14 and the output shaft 20 are substantially matched a gear shift may take place.

Furthermore, although it has been described above that the controller performs steps (a) to (f) of the gear shift, it should be appreciated that the controller may only be required to perform step (c) or steps (c) and (d), e.g. in the case of a manual or semi-automated manual transmission where steps (a) and (b) and (e) and (f) may be carried out by a user.

Also, the gearbox 10 may further comprise a third clutch mechanism 34 located between the layshaft 14 and the output shaft 20. The third clutch mechanism 34 is configured to selectively engage the output shaft 20 with the layshaft 14 and cause rotation of the layshaft 14. The third clutch mechanism 34 may be used as additional or alternative method of matching the rotational speeds of the layshaft 14 and the output shaft 20. Typically, the third clutch mechanism 34 is used to increase the rotational speed of the layshaft 14 by temporarily engaging the layshaft 14 to the output shaft 20 when the output shaft 20 is rotating faster than the layshaft 14.

## Claims

1. A method of shifting a gearbox (10), the gearbox (10) comprising an input shaft (12), a layshaft (14), an output shaft (20) engageable with the layshaft (14), a first clutch mechanism (16) configured to selectively engage the input shaft (12) with the layshaft (14) and cause rotation of the layshaft (14) in a first direction, and a second clutch mechanism (18) configured to selectively engage the input shaft (12) with the layshaft (14) and cause rotation of the layshaft (14) in a second opposite direction, the method comprising the steps of:
disengaging the first clutch mechanism (16) from the input shaft (12);
disengaging the currently selected gear;
comparing the rotational speeds of the layshaft (14) and the output shaft (20);
temporarily engaging the second clutch mechanism (18) with the input shaft (12) until the rotational speed of the layshaft (14) substantially matches that of the output shaft (20);
engaging a newly selected gear; and
re-engaging the first clutch mechanism (16) with the input shaft (12).

2. The method of shifting a gearbox (10) of claim 1, wherein the rotational speed of the layshaft (14) is reduced by the step of temporarily engaging the second clutch mechanism (18) with the input shaft (12).

3. A method of shifting a gearbox (10), the gearbox (10) comprising an input shaft (12), a layshaft (14) engageable with the input shaft (12), an output shaft (20), a first clutch mechanism (16) configured to selectively engage the output shaft (20) with the layshaft (14) and cause rotation of the output shaft (20) in a first direction, and a second clutch mechanism (18) configured to selectively engage the output shaft (20) with the layshaft (14) and cause rotation of the output shaft (20) in a second opposite direction, the method comprising the steps of:
disengaging the first clutch mechanism (16) from the output shaft (20);
disengaging the currently selected gear;
comparing the rotational speeds of the layshaft (14) and the output shaft (20);
temporarily engaging the second clutch mechanism (18) with the output shaft (20) until the rotational speed of the layshaft (14) substantially matches that of the output shaft (20);
engaging a newly selected gear; and
re-engaging the first clutch mechanism (16) with the output shaft (20).

4. The method of shifting a gearbox (10) of claim 3, wherein the rotational speed of the layshaft (14) is reduced by the step of temporarily engaging the second clutch mechanism (18) with the output shaft (20).

5. The method of shifting a gearbox (10) of any preceding claim, comprising the further step of preventing a gear selection taking place until the rotational speed of the layshaft (14) is substantially the same as that of the output shaft (20) .

6. The method of shifting a gearbox (10) of any preceding claim, wherein the step of engaging the newly selected gear only takes place when the rotational speed of the layshaft (14) substantially matches that of the output shaft (20).

7. The method of shifting a gearbox (10) of any preceding claim, further comprising the initial step of receiving a gearbox shift request.

8. The method of shifting a gearbox (10) of claim 7, wherein the gearbox shift request is an upshift request.

9. The method of shifting a gearbox (10) of any preceding claim, wherein the gearbox (10) further comprises a controller, and wherein each of the method steps are performed by the controller.

10. A gearbox (10) comprising:
an input shaft (12);
a layshaft (14);
an output shaft (20) engageable with the layshaft (14);
a first clutch mechanism (16) configured to selectively engage the input shaft (12) with the layshaft (14) and cause rotation of the layshaft (14) in a first direction;
a second clutch mechanism (18) configured to selectively engage the input shaft (12) with the layshaft (14) and cause rotation of the layshaft (14) in a second opposite direction; and
a controller configured to selectively engage either the first clutch mechanism (16) when the layshaft (14) is rotating in the second direction or the second clutch mechanism (18) when the layshaft (14) is rotating in the first direction such that the rotational speed of the layshaft (14) substantially matches that of the output shaft (20).

11. A gearbox (10) as claimed in claim 10, wherein the gearbox (10) further comprises means for comparing the rotational speeds of the layshaft (14) and the output shaft (20), and wherein the controller is configured to selectively engage either the first clutch mechanism (16) when the layshaft (14) is rotating in the second direction or the second clutch mechanism (18) when the layshaft (14) is rotating in the first direction such that the rotational speed of the layshaft (14) is reduced to substantially match that of the output shaft (20) .

12. A gearbox (10) comprising:
an input shaft (12);
a layshaft (14) engageable with the input shaft (12);
an output shaft (20);
a first clutch mechanism (16) configured to selectively engage the output shaft (20) with the layshaft (14) and cause rotation of the output shaft (20) in a first direction;
a second clutch mechanism (18) configured to selectively engage the output shaft (20) with the layshaft (14) and cause rotation of the output shaft (20) in a second opposite direction; and
a controller configured to selectively engage either the first clutch mechanism (16) when the output shaft (20) is rotating in the second direction or the second clutch mechanism (18) when the output shaft (20) is rotating in the first direction such that the rotational speed of the layshaft (14) substantially matches that of the output shaft (20).

13. A gearbox (10) as claimed in claim 12, wherein the gearbox further comprises means for comparing the rotational speeds of the layshaft (14) and the output shaft (20), and wherein the controller is configured to selectively engage either the first clutch mechanism (16) when the output shaft (20) is rotating in the second direction or the second clutch mechanism (18) when the output shaft (20) is rotating in the first direction such that the rotational speed of the layshaft (14) is reduced to substantially match that of the output shaft (20).

14. A gearbox (10) as claimed in any of claims 10 to 13, wherein the controller is configured to allow engagement between the layshaft (14) and the output shaft (20) only when the rotational speed of the layshaft (14) is substantially equal to that of the output shaft (20).

15. A gearbox (10) as claimed in any of claims 10 to 14, wherein the gearbox (10) further comprises a third clutch mechanism, the third clutch mechanism being configured to selectively engage the output shaft (20) with the layshaft (14) and cause rotation of the layshaft (14).

16. A gearbox (10) as claimed in any of claims 10 to 15, wherein the gearbox (10) further comprises a gear selection lever and at least one shift rod connected thereto, and means for preventing the gear selection lever and shift rod from selecting a gear until the rotational speed of the layshaft (14) is substantially equal to that of the output shaft (20) .

17. A gearbox (10) as claimed in claim 16, wherein the means for preventing the gear lever and shift rod from selecting a gear includes a detent which prevents movement of the shift rod.

18. A vehicle comprising the gearbox 10 of any of claims 10 to 17.
